# EUROPEAN PATENT SPECIFICATION

(11) **EP 1 920 199 B1**
(45) Date of publication and mention of the grant of the patent: **14.01.2015**
(21) Application number: 06733489.6
(22) Date of filing: 12.05.2006
(51) Int. Cl.: F24J 2/48

(54) **METHOD FOR PRODUCING NICKEL-ALUMINA COATED SOLAR ABSORBERS**
VERFAHREN ZUR HERSTELLUNG VON NICKEL-ALUMINIUM-BESCHICHTETEN SOLARABSORBERN
MÉTHODE DE FABRICATION D'ABSORBEURS SOLAIRES REVÊTUS DE NICKEL-ALUMINE

(30) Priority: 02.08.2005 SE 0501773
(43) Date of publication of application: 14.05.2008
(73) Proprietor: Sunstrip AB, 612 44 Finspång (SE)
(72) Inventor: BOSTRÖM, Tobias, S-752 40 UPPSALA (SE)
(74) Representative: Valea AB
(86) International application number: PCT/SE2006/050119
(87) International publication number: WO 2007/015670

(56) References cited:
- EP-A1- 1 397 622
- DE-A1- 2 829 779
- DE-A1- 19 620 645
- DE-C1- 4 425 140
- US-A- 4 002 541
- US-A- 5 523 132
- TESFAMICHAEL T. ET AL.: 'Treatment of antireflection on tin oxide coated anodized aluminum selective absorber surface' SOLAR ENERGY MATERIALS AND SOLAR CELLS vol. 54, 1998, pages 213 - 221, XP004148892
- SATHIARAJ T.S. ET AL.: 'High aborption and low emittance AR-coated Ni-AL 2 0 3 solar absorbers' J. PHYS. D:APPL. PHYS. vol. 23, 1990, pages 250 - 254, XP020015305
- BOSTRöM T. ET AL.: 'Solution-chemical derived nickel-alumina coatings for thermal solar absorbers' SOLAR ENERGY vol. 74, 2003, pages 497 - 503, XP004455638
- FAROOQ M. ET AL.: 'Optical properties of higher and lower refractive index composites in solar selective coatings' SOLAR ENERGY MATERIALS & SOLAR CELLS vol. 71, 2002, pages 73 - 83, XP004323127
- BOSTRöM T.K. ET AL.: 'Anti-reflection coatings for solution-chemically derived nickel-alumina solar absorbers' SOLAR ENERGY MATERIALS & SOLAR CELLS vol. 84, 2004, pages 183 - 191, XP003000382
- CRAIGHEAD H.G. ET AL.: 'Optical properties of selectively absorbing metal/insulator composite films' J. VAC. SCI. TECHNOL. vol. 15, no. 2, March 1978 - April 1978, pages 269 - 271, XP003000383

## Description

### TECHNICAL FIELD

The present invention relation in general to thermal solar collector systems and in particular to spectrally selective coated solar absorbers.

### BACKGROUND

During the last 30 years, solar energy systems have been become more and more commercially interesting. The huge amount of solar radiation that is potentially available on the earth constitutes a practically unlimited source of energy. One alternative to make use of the solar energy is to use thermal solar collector systems. One very important component of a solar collector system is typically the solar thermal collector. Two collector types are dominating the market today, flat-plate types and vacuum tube types. The most important part of both constructions is the absorber, which converts solar radiation into heat using photo-thermal conversion. Absorbed heat is typically transferred to a liquid or gaseous medium, which flows through a tube connected to the absorber. Losses are caused by convection, radiation and conduction. Convection and conduction are reduced by covering the absorbers with transparent glazing and insulating the collector box, respectively. Radiation losses can be reduced by manipulating the absorber surface.

Most absorbers are constructed as fin absorbers and consist of a metal plate that has a good heat conductivity and high infrared reflectance such as aluminum or copper. The plate is preferably coated with a thin surface layer that is spectrally selectively absorbing. An ideal absorber should absorb all solar radiation but avoid losing the absorbed energy as infrared radiation, i.e. heat.

In the article [1], an absorber having a substrate covered by a two thin layers is investigated. The first layer covering the substrate consists of nickel nano-particles embedded in a dielectric matrix of alumina. The optimal coating had a solution nickel content of 65 volume percent, a thickness of 0.1 µm and a particle size of around 10 nm. The outermost layer is an anti-reflection layer. The bare first layer provided a normal solar absorptance of 0.83 and a normal thermal emittance of 0.03. By adding the anti-reflection layer the solar absorptance could be increased to a maximum of 0.92. According to [2] the optimum anti-reflection layer was found to be an alumina layer, while silica and hybrid silica anti-reflection layers provided absorptances of 0.90-0.91. However, alumina can not withstand necessary accelerated ageing tests and can therefore not be used in a commercial product.

Even with such high absorptance values, as much as 8% of the incoming solar radiation will not at all be absorbed. However, most commercial systems would benefit from even smaller losses. In [3], it was concluded that an absorber comprising more layers at least theoretically could increase the efficiency further. Losses of no more than 5% (i.e. an absorptance of 0.95) were predicted using general knowledge from other types of multilayer absorber systems.

### SUMMARY

A general problem with prior art solar absorbers is that they still exhibit undesired high radiation losses. A further problem with prior art solar absorbers is that production costs are too high. Yet a further problem is that the manufacturing process of leading commercially available solar thermal absorbers utilizes vacuum techniques which are complicated and costly.

A general object of the present invention is therefore to provide improved solar absorbers, in particular concerning absorptance. A further object of the present invention is to provide such improved solar absorbers allowing for cost efficient and environmentally friendly manufacturing. Yet a further object is to provide solar absorbers which allow manufacturing avoiding vacuum techniques.

The above objects are achieved by devices according to the enclosed patent claims. In general words, a solar absorber has a substrate covered with at least three thin layers. The outermost layer is preferably an anti-reflection layer. The most inner layer is composed by nickel nano-particles embedded in a dielectric matrix of alumina, with an aluminum to nickel atomic ratio between 0.15-0.25, and preferably between 0.18-0.23. In a preferred embodiment, also the second layer consists of nano-particles embedded in a dielectric matrix of alumina, here with an aluminum to nickel atomic ratio between 0.8-1.2. The innermost layer has in preferred embodiments a thickness of 68-98 nm, while the second layer has a thickness of 50-80 nm. The nickel particles have a preferred average diameter of 5-10 nm. The anti-reflection layer has in preferred embodiments a refractive index in the solar spectrum wavelength interval of 1.38-1.46, e.g. silica or hybrid silica, with a thickness of 48-78 nm.

One advantage with the present invention is that a solar absorber with an unexpectedly high absorptance is achieved, where the loss in absorbed incoming solar radiation limited to 3%, i.e. about one third compared to previous similar systems and considerably lower than what was expected to be possible to achieve. Furthermore, the manufacturing can be performed in a cost efficient and environmentally friendly manner in ambient pressure.

### BRIEF DESCRIPTION OF THE DRAWINGS

The invention, together with further objects and advantages thereof, may best be understood by making reference to the following description taken together with the accompanying drawings, in which:
FIG. 1 is a schematic drawing of a typical thermal solar system;
FIG. 2 is a schematic drawing of a cross-section of a typical flat plate solar collector;
FIG. 3 is a diagram illustrating the solar intensity distribution and blackbody emission;
FIG. 4 is a schematic drawing of a cross section of an embodiment of a solar absorber according to the present invention; and
FIG. 5 is a diagram illustrating reflectance measurement results for an absorber according to the present invention and for an absorber according to prior art.

### DETAILED DESCRIPTION

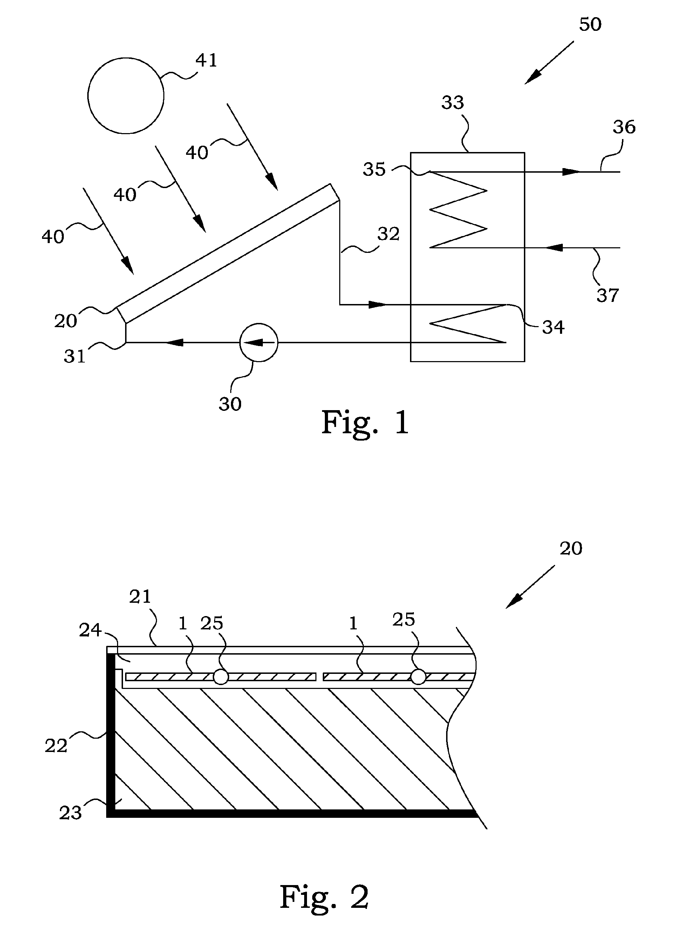

Fig. 1 illustrates a typical thermal solar system 50, in which a solar collector 20 according to the present invention can be utilised. The sun 41 emits solar radiation 40, which falls onto the solar collector 20. A liquid or gaseous medium is pumped by a pump 30 through an inlet pipe 31 to the solar collector 20, where heat generated by the solar radiation 40 heats the liquid or gaseous medium. The heated liquid or gaseous medium is transferred by an outlet pipe 32 to a heat exchanger tank 33. In a heat exchanger 34, a part of the heat content of the liquid or gaseous medium is transferred to a liquid or gaseous medium of the tank 33, before the liquid or gaseous medium is returned to the solar collector 20. A second heat exchanger 35 uses the heat content of the liquid or gaseous medium in the exchanger tank 33 to heat water input by an inlet pipe 37. The heated water is provided in an outlet pipe 36 to be used for any purpose.

Fig. 2 illustrates an embodiment of a flat plate solar collector 20, in which an absorber according to the present invention advantageously can be used. The solar collector 20 comprises a housing 22 comprising a number of solar absorbers 1. The solar absorbers 1 are in conductive contact with tubes 25 for the heat medium. The solar absorbers 1 are typically insulated thermally from the housing 22 by insulation material 23. Convection from the solar absorbers 1 is prevented by the provision of a transparent glazing 21 above the solar absorbers 1, creating an air gap 24 of essentially non-flowing air.

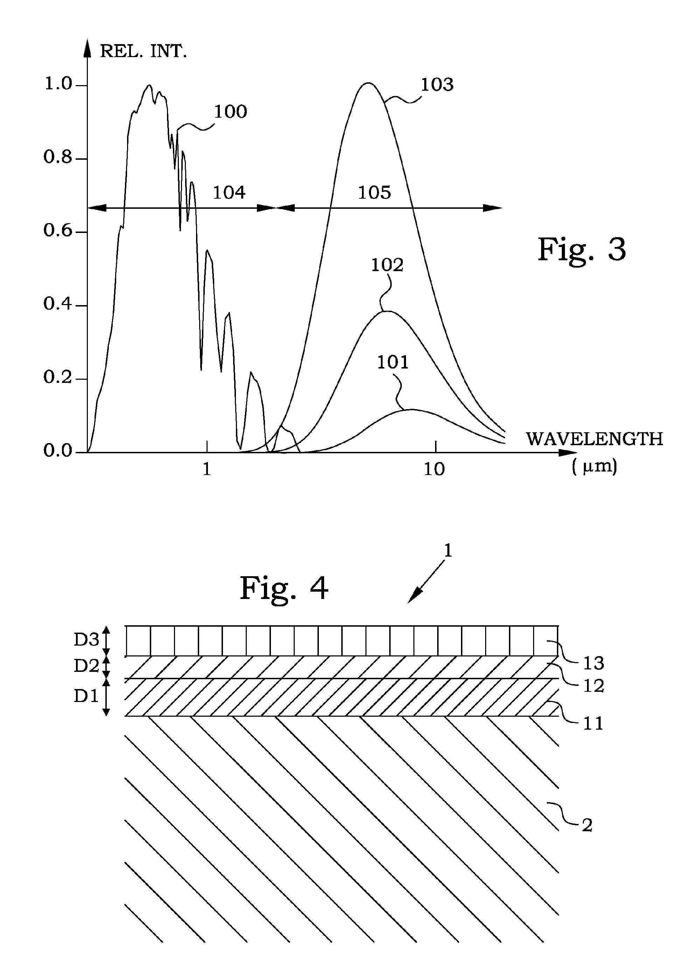

Fig. 3 depicts a diagram illustrating the solar intensity distribution as a curve 100. In order to utilise the available energy in an optimal manner, the absorptance of a solar absorber surface should be high within an interval 104. At the same time, all bodies emit thermal radiation corresponding to its temperature and emittance properties. A surface coating having a high reflectance in a wavelength interval 105 can thereby minimize the emitted thermal radiation. Blackbody emittance distributions corresponding to 100°C, 200°C and 300°C are represented by curves 101, 102 and 103, respectively. A spectrally selective solar absorber therefore ideally has a high absorptance in the interval 104 and a high reflectance in the interval 105.

Fig. 4 illustrates a presently preferred embodiment of a solar absorber 1 according to the present invention. A substrate 2 is covered by a first 11, a second 12 and a third 13 layer. The first 11 and second 12 layers are main absorption layers, while the third layer 13 acts as an anti-reflection and protection layer. The substrate 2 is in this embodiment made of aluminium, but other substrates having good heat conductivity and high infrared reflectance may also be used, e.g. copper or stainless steel.

The first layer 11 comprises nickel nano-particles embedded in a dielectric matrix of alumina. The performance of the solar absorber 1 is relatively sensitive to the aluminum to nickel atomic ratio. A preferred aluminum to nickel atomic ratio is 0.2. In the interval 0.18-0.23 of the aluminum to nickel atomic ratio, the performance is believed to still be excellent, and in the interval 0.15-0.25, the performance is still estimated to be better than expected from prior art predictions. The thickness D1 of the first layer 11 is within the interval 68 to 98 nm with a most preferable thickness of around 82 nm. Most nickel particles are in the size of 5-10 nm, whereby an average diameter of the nickel particles is in the interval of 5-10 nm. The particles are preferably essentially spherical.

The second layer 12 also comprises nickel nano-particles embedded in a dielectric matrix of alumina. The performance of the solar absorber 1 is also in this layer relatively sensitive to the nickel content. A preferred aluminum to nickel atomic ratio is 0.95. In the interval 0.8-1.2 of the aluminum to nickel atomic ratio, the performance is estimated to be better than expected from prior art predictions. The thickness D2 of the second layer 12 is within the interval 50 to 80 nm with a most preferable thickness of 65 nm. Also in this layer, most nickel particles are of the size of 5-10 nm, whereby at least an average diameter of the nickel particles is in the interval of 5-10 nm. The particles are preferably essentially spherical.

The third layer 13 is an anti-reflection layer. Experiments have proven that pure silica and hybrid silica, described more in detail below, are useful indeed. However, also other anti-reflection materials, having the real part of the refractive index in the interval of 1.38 to 1.46, in the solar spectrum wavelength interval would operate well. An optimum thickness of the anti-reflection layer in the present embodiment has been found to be around 62 nm, and at least preferably within the interval of 48-78 nm.

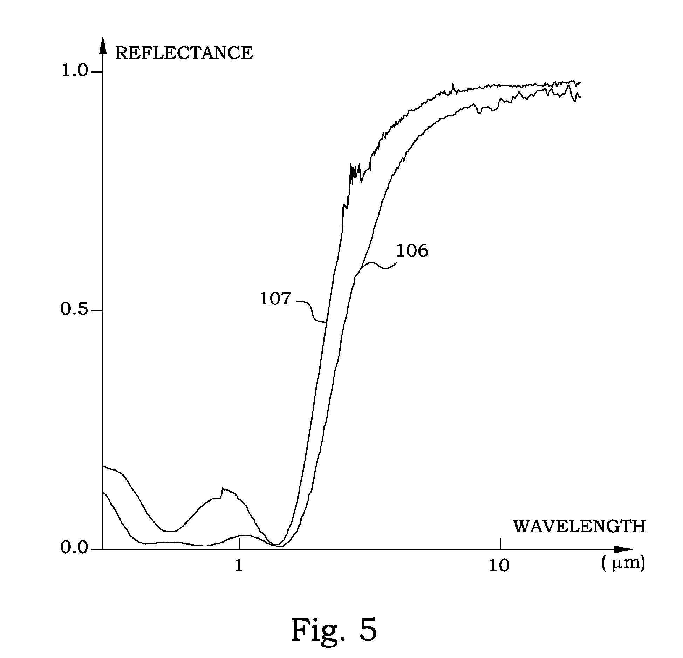

An absorber with compositions according to the above embodiment has been investigated. In Fig. 5, reflectance curves 106, 107 of an absorber according to the present invention and an absorber according to [1], respectively, are illustrated. The drastic improvement is easily observable.

In the above embodiment, a three-layer structure is utilised. However, also absorbers having more layers may be possible, e.g. three absorbing layers covered by an anti-reflection layer. It is then, according to the present invention, useful to have an innermost layer having the above discussed composition.

Moreover, also the outermost layer in a three-layer configuration may be used also for absorption purposes. Either, the configuration operates without any anti-reflection layer, or the outermost layer could be a layer that simultaneously acts as an anti-reflection layer with regards to the underlying layers and as an absorbing layer as such.

The two inner layers of the presented embodiments of the present invention are based mainly on the dielectric matrix of alumina with embedded nickel particles. However, this dielectric matrix may be modified or altered by adding or changing to other elements or compounds. The dielectric matrix may for example be composed of silica or titania instead of alumina or any combination of these matrix materials. Likewise, it is also possible to tune the properties by adding or changing to particles of other elements or compounds. Possible particle elements are C, Al, Mg, Ca, Ti, V, Cr, Mn, Fe, Co, Ni, Cu, Zn, Ag or Sn or combinations of these elements. In particular, having an alumina matrix, Mg, Ca, Ti, Mn, Ni, Zn, or Sn or combinations of these elements could be useful and also C could be a possible particle candidate. For silica matrices, Al, Mg, Ca, Ti, Mn, Fe, Co, Zn, Ag or Sn or combinations of these elements could be useful.

In the case of nickel in alumina, the aluminum to nickel atomic ratio in the first layer should be kept within the interval of 0.15-0.25. For other combinations of matrix and particle elements, other intervals are applicable, which have to be determined from combination to combination.

Manufacturing of absorbers according to the present invention can be performed in different ways, but it has been found that solution-chemistry and sol gel processes are very suitable. The absorber of the embodiment of Fig. 4 was produced in three steps. First, the substrate was coated with a solution containing nickel and aluminum ions. First, an aluminum precursor solution and a nickel precursor solution were prepared, which subsequently were mixed in the requested ratio. The mixed solution was spin-coated onto the substrate. The coated substrate was then subjected to a heat treatment, forming the first absorbing layer. The heat treatment was performed in an oxygen-free atmosphere in order to reduce the nickel ions into metallic nickel. In the heat treatments for the performed test absorbers, nitrogen gas was flowing over the surface during the heat treatment. The temperature was gradually increased up to a maximum temperature of 450-580°C, in order to remove residual organic groups completely.

The first two absorbing nickel-alumina layers may though be heated differently. In order to save energy, time and money it could be sufficient to heat them to a lower temperature and do the final high temperature heat treatment when the last anti-reflection layer is added. Alternatively the first two absorbing nickel-alumina layers could simply be cured with UV-light before a final high temperature heat treatment is done with the anti-reflection layer.

Secondly, a second layer was deposited on top of the first layer as a solution of a different concentration of nickel and aluminum ions, followed by a heat treatment, in analogy with the fabrication of the first layer.

Finally, an anti-reflection coating solution was added on top. The process to create the silica or hybrid silica anti-reflection layer, selected for the test absorbers is based on a sol-gel approach, known as such in prior art. There are a number of different solution based procedures to create silica or hybrid silica but the employed method for the test absorbers was the following. Tertraethoxysilane, TEOS, and methyltrietoxysilane, MTES, were used as starting material. If only TEOS is used, the resulting film will consist of 100% silica. Mixing TEOS and MTES will generate a hybrid silica film, the higher the proportion of MTES in relation to TEOS is the more flexible will the resulting coating be. TEOS was first mixed with a solvent such as ethanol and then with diluted HCl, in order to hydrolyze TEOS. MTES (if any) was then added, and a further hydrolysis took place. The solution was spin-coated onto the second layer, and after yet another heat treatment the anti-reflection layer was formed. The anti-reflection layer was heated up to around 300-500°C.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

[1] T. Boström et al., "Solution-chemical derived nickel-alumina coatings for thermal solar absorbers", Solar energy 74 (2003) pp. 497-503.
[2] T. Boström et al., "Anti reflection coatings for solution-chemically derived nickel-alumina solar absorbers", Solar energy materials and solar cells, vol. 84, Issues 1-4, October 2004, pp. 183-191.
[3] T. Boström, "A New Generation of Spectrally Selective Solar Absorbers and Thermal Solar Systems", Licentiate thesis, Faculty of Science and Technology, Uppsala University, march 2004.

## Claims

1. A method for producing a solar absorber (1), comprising:
a substrate (2);
a first layer (11), coating said substrate (2); and
a second layer (12), coating said first layer (11); and
a third layer (13), coating said second layer (12);
**characterized by**
said first layer (11) being based on a dielectric matrix with embedded particles formed through:
preparing a first precursor solution comprising alumina; and
preparing a second precursor solution comprising ions of Ni; and
mixing the first and second precursor solutions in a requested ratio, and
coating the mixed solution onto the substrate, and
subjecting the coated substrate to a heat treatment in an oxygen-free atmosphere reducing the ions into particles.

2. A method according to claim 1, **characterized in that** the requested ratio is chosen such that the first layer (11) is given an aluminum to nickel atomic ratio in the interval of 0.15-0.25.

3. A method according to claim 1, **characterized in that** the requested ratio is chosen such that the first layer (11) is given an aluminum to nickel atomic ratio in the interval of 0.18-0.23.

4. A method according to claim 2 or 3, **characterized in that** the first layer (11) is given a thickness (D1) of 68-98 nm.

5. A method according to any of claims 1 to 4, **characterized in that** the second layer (12) is based on a dielectric matrix with embedded particles formed through:
preparing a third precursor solution comprising alumina; and
preparing a fourth precursor solution comprising ions of Ni; and
mixing the third and fourth precursor solutions in a requested ratio, different from the ratio of the first layer,
depositing the mixed solution on top of the first layer, and
subjecting the coated first layer to a heat treatment in an oxygen-free atmosphere reducing the ions into particles.

6. A method according to claim 5, **characterized in that** the ratio of the third and fourth precursor solutions is chosen such that said second layer (12) is given an aluminum to nickel atomic ratio of 0.8-1.2.

7. A method according to claim 5 or 6, **characterized in that** said second layer (12) is given a thickness (D2) of 50-80 nm.

8. A method according to any of claims 1 to 7, **characterized in that** an anti-reflection coating solution is added on top of said second layer (12), forming said third layer (13) as an anti-reflection layer.

9. A method according to claim 8, **characterized in that** said third layer (13) is given a real part of the refractive index, n, in the range of 1.38 to 1.46 in the solar spectrum wavelength interval.

10. A method according to claim 9, **characterized in that** said third layer (13) is formed to consist of silica or hybrid silica.

11. A method according to any of claims 8 to 10, **characterized in that** said third layer (13) is given a thickness (D3) of 48-78 nm.

12. A method according to any of claims 2 to 11, **characterized in that** said nickel particles are given an average diameter in the interval of 5-10 nm.

## Patentansprüche

1. Verfahren zur Herstellung eines Solarabsorbers (1), umfassend:
ein Substrat (2);
eine erste Schicht (11), die das Substrat (2) bedeckt; und
eine zweite Schicht (12), die die erste Schicht (11) bedeckt; und
eine dritte Schicht (13), die die zweite Schicht (12) bedeckt;
wobei
die erste Schicht (11) auf einer dielektrischen Matrix von Aluminiumoxid mit eingebetteten Nickelpartikeln basiert,
**dadurch gekennzeichnet, dass** das Verfahren die folgenden Schritt aufweist:
Herstellen einer ersten Precursorlösung, umfassend Aluminiumionen; und
Herstellen einer zweiten Precursorlösung, umfassend Ni-Ionen; sowie
Vermischen der ersten und zweiten Precursorlösungen in einem vorbestimmten Verhältnis, und Auftragen der vermischten Lösung auf das Substrat, sowie
Unterwerfen des beschichteten Substrats einer Hitzebehandlung in einer sauerstofffreien Atmosphäre, wobei die Ni-Ionen zu metallischem Nickel reduziert werden.

2. Verfahren gemäß Anspruch 1, **dadurch gekennzeichnet, dass** das vorbestimmte Verhältnis so gewählt wird, dass die erste Schicht (11) ein Aluminium-zu-Nickel-Atomverhältnis in dem Bereich von 0,15-0,25 erhält.

3. Verfahren gemäß Anspruch 1, **dadurch gekennzeichnet, dass** das vorbestimmte Verhältnis so gewählt wird, dass die erste Schicht (11) ein Aluminium-zu-Nickel-Atomverhältnis in dem Bereich von 0,18-0,23 erhält.

4. Verfahren gemäß Anspruch 2 oder 3, **dadurch gekennzeichnet, dass** die erste Schicht (11) eine Dicke (D1) von 68-98 nm erhält.

5. Verfahren gemäß einem der Ansprüche 1 bis 4, **dadurch gekennzeichnet, dass** die zweite Schicht (12) auf einer dielektrischen Matrix von Aluminiumoxid mit eingebetteten Nickelpartikeln basiert, gebildet durch:
Herstellen einer dritten Precursorlösung, umfassend Aluminiumionen; und
Herstellen einer vierten Precursorlösung, umfassend Ni-Ionen; sowie
Vermischen der dritten und vierten Precursorlösungen in einem vorbestimmten Verhältnis, das von dem Verhältnis der ersten Schicht verschieden ist,
Abscheiden der vermischten Lösung oben auf der ersten Schicht, und
Unterwerfen der aufgetragenen ersten Schicht einer Hitzebehandlung in einer sauerstofffreien Atmosphäre, wobei die Ni-Ionen zu metallischem Nickel reduziert werden.

6. Verfahren gemäß Anspruch 5, **dadurch gekennzeichnet, dass** das Verhältnis der dritten und vierten Precursorlösungen so gewählt wird, dass die zweite Schicht (12) ein Aluminium-zu-Nickel-Atomverhältnis von 0,8-1,2 erhält.

7. Verfahren gemäß Anspruch 5 oder 6, **dadurch gekennzeichnet, dass** die zweite Schicht (12) eine Dicke (D2) von 50-80 nm erhält.

8. Verfahren gemäß einem der Ansprüche 1 bis 7, **dadurch gekennzeichnet, dass** eine Antireflexions-Beschichtungslösung zuoberst auf der zweiten Schicht (12) zugegeben wird, wobei die dritte Schicht (13) als Antireflexionsschicht gebildet wird.

9. Verfahren gemäß Anspruch 8, dadurch **gekennzeich**n e t , dass die dritte Schicht (13) einen Realteil des Brechungsindex n in dem Bereich von 1,38 bis 1,46 im Solarspektrum-Wellenlängenintervall erhält.

10. Verfahren gemäß Anspruch 9, dadurch **gekennzeich**n e t , dass die dritte Schicht (13) so gebildet ist, dass sie aus Siliciumdioxid oder Hybridsiliciumdioxid besteht.

11. Verfahren gemäß einem der Ansprüche 8 bis 10, **dadurch gekennzeichnet, dass** die dritte Schicht (13) eine Dicke (D3) von 48-78 nm erhält.

12. Verfahren gemäß einem der Ansprüche 2 bis 11, **dadurch gekennzeichnet, dass** die Nickelpartikel einen durchschnittlichen Durchmesser in dem Bereich von 5-10 nm erhalten.

## Revendications

1. Procédé de production d'un absorbeur solaire (1), comprenant :
un substrat (2) ;
une première couche (11), recouvrant ledit substrat (2) ; et
une deuxième couche (12), recouvrant ladite première couche (11) ; et
une troisième couche (13), recouvrant ladite deuxième couche (12) ;
dans lequel
ladite première couche (11) est à base d'une matrice diélectrique d'alumine incorporant des particules de nickel ;
**caractérisé en ce que** le procédé comprend les étapes suivantes :
la préparation d'une première solution de précurseur comprenant des ions d' aluminium ; et
la préparation d'une seconde solution de précurseur comprenant des ions de Ni ; et
le mélange de la première et de la seconde solution de précurseur dans un rapport requis, et
le revêtement du substrat avec la solution mixte, et
la soumission du substrat revêtu à un traitement thermique sous une atmosphère exempte d'oxygène pour réduire les ions de Ni en nickel métallique.

2. Procédé selon la revendication 1, **caractérisé en ce que** le rapport requis est choisi de façon que la première couche (11) présente un rapport atomique aluminium sur nickel situé dans l'intervalle allant de 0,15 à 0,25.

3. Procédé selon la revendication 1, **caractérisé en ce que** le rapport requis est choisi de façon que la première couche (11) présente un rapport atomique aluminium sur nickel situé dans l'intervalle allant de 0,18 à 0,23.

4. Procédé selon la revendication 2 ou 3, **caractérisé en ce que** la première couche (11) présente une épaisseur (D1) de 68 nm à 98 nm.

5. Procédé selon l'une quelconque des revendications 1 à 4, **caractérisé en ce que** la deuxième couche (12) est à base d'une matrice diélectrique d'alumine incorporant des particules de nickel formée par :
la préparation d'une troisième solution de précurseur comprenant des ions d' aluminium ; et
la préparation d'une quatrième solution de précurseur comprenant des ions de Ni ; et
le mélange de la troisième et la quatrième solution de précurseur dans un rapport requis, différent du rapport de la première couche,
le dépôt de la solution mixte sur la première couche, et
la soumission de la première couche revêtue à un traitement thermique sous une atmosphère exempte d'oxygène pour réduire les ions de Ni en nickel métallique.

6. Procédé selon la revendication 5, **caractérisé en ce que** le rapport de la troisième et de la quatrième solution de précurseur est choisi de façon que ladite deuxième couche (12) présente un rapport atomique aluminium sur nickel de 0,8 à 1,2.

7. Procédé selon la revendication 5 ou 6, **caractérisé en ce que** ladite deuxième couche (12) présente une épaisseur (D2) de 50 nm à 80 nm.

8. Procédé selon l'une quelconque des revendications 1 à 7, **caractérisé en ce qu'**une solution de revêtement anti-réfléchissant est ajoutée au-dessus de ladite deuxième couche (12) pour former ladite troisième couche (13) sous la forme d'une couche anti-réfléchissante.

9. Procédé selon la revendication 8, **caractérisé en ce que** ladite troisième couche (13) présente une partie réelle de l'indice de réfraction, n, située dans la plage allant de 1,38 à 1,46 dans l'intervalle des longueurs d'onde du spectre solaire.

10. Procédé selon la revendication 9, **caractérisé en ce que** ladite troisième couche (13) est formée de façon à être constituée de silice ou d'une silice hybride.

11. Procédé selon l'une quelconque des revendications 8 à 10, **caractérisé en ce que** ladite troisième couche (13) présente une épaisseur (D3) de 48 nm à 78 nm.

12. Procédé selon l'une quelconque des revendications 2 à 11, **caractérisé en ce que** lesdites particules de nickel présentent un diamètre moyen situé dans l'intervalle allant de 5 nm à 10 nm.
